# EUROPÄISCHE PATENTSCHRIFT

(11) **EP 2 835 759 B1**
(45) Veröffentlichungstag und Bekanntmachung des Hinweises auf die Patenterteilung: **27.03.2019**
(21) Anmeldenummer: 13179784.7
(22) Anmeldetag: 08.08.2013
(51) Int. Cl.: G06F 21/88, G06F 11/07

(54) **Verfahren und System zur Handhabung eines defekten elektronischen Nutzerendgerätes**
Method and system for managing a defective electronic user terminal
Procédé et système de manipulation d'un terminal utile électronique défectueux

(43) Veröffentlichungstag der Anmeldung: 11.02.2015
(73) Patentinhaber: GbR Oliver Oechsle, Dr. Hans-Peter Dietz, 40547 Düsseldorf (DE)
(72) Erfinder: Oechsle, Oliver, 40547 Düsseldorf (DE); Dietz, Hans-Peter, 45478 Mühlheim an der Ruhr (DE)
(74) Vertreter: Isarpatent

(56) Entgegenhaltungen:
- WO-A1-01/03100
- WO-A1-92/03787
- WO-A1-2013/083940
- DE-A1- 3 439 563
- US-A1- 2007 056 043
- US-A1- 2009 241 172

## Beschreibung

Die Erfindung betrifft ein Verfahren und ein System zur Handhabung bzw. Identifizierung eines zumindest vermutet teilweise defekten elektronischen Nutzerendgerätes, beispielsweise einer Digitalkamera, eines MP3-Players oder eines Smartphones.

Gerätehersteller von elektronischen Produkten, insbesondere von elektronischen Nutzerendgeräten, beispielsweise Digitalkameras, MP3-Abspielgeräte, Spielkonsolen oder Smartphones, übernehmen gegenüber ihren Kunden die Gewähr, dass die von ihnen hergestellten Geräte einwandfrei funktionieren bzw. in ihrer Funktionsfähigkeit in keinster Weise beeinträchtigt sind. Treten an einem derartigen elektronischen Nutzerendgerät Fehler auf, so besteht für den Gerätehersteller die Verpflichtung das fehlerhafte Gerät durch ein fehlerfreies zu ersetzen oder die aufgetretenen technischen Defekte zu beheben, sofern die aufgetretenen Fehler nicht auf eine fehlerhafte Handhabung seitens des Kunden zurückzuführen sind. Eine fehlerhafte Handhabung des Benutzers kann beispielsweise darin bestehen, dass er das Gerät fallen lässt oder Feuchtigkeit aussetzt.

Herkömmliche Geräte, insbesondere elektronische Nutzerendgeräte, weisen in vielen Fällen integrierte Schaltkreise auf, die auf Schaltplatinen montiert sind. Beim Ausfall einer Funktionalität, die durch einen integrierten Schaltkreis auf einer Schaltplatine bereitgestellt wird, übersteigt oft der Aufwand für eine Reparatur des Schaltkreises bzw. der Schaltplatine die gesamten Produktionskosten des Endgerätes. Aufgrund der hohen Komplexität der elektronischen Nutzerendgeräte können technische Fehler nur mit einem sehr hohen Aufwand aufgefunden werden. Wird ein Fehler aufgrund einer Fehlfunktion beispielsweise in einem integrierten Schaltkreis ermittelt, so ist es in vielen Fällen notwendig, die gesamte Schaltplatine auszutauschen.

Für den Fall, dass sich die Reparatur eines in seiner Funktionsfähigkeit zumindest teilweise beeinträchtigten elektronischen Gerätes nicht mehr lohnt, wird das defekte Gerät von dem Gerätehersteller bzw. dem Gerätehändler durch ein fehlerfreies Gerät ersetzt. Zur Unterbindung von Missbrauch durch einen Nutzer erfolgt vorher eine Gewährleistungsprüfung. Zunächst wird geprüft, ob seitens des Nutzers überhaupt ein Gewährleistungsanspruch besteht. Dies geschieht beispielsweise mit Hilfe eines Kundenbelegs und der dem Kauf zugrundeliegenden Gewährleistungsregelung. Darüber hinaus kann überprüft werden, ob der Gewährleistungsanspruch noch in die Garantiezeit des jeweiligen Gerätes fällt. In einem weiteren Schritt wird geprüft, ob die Gewährleistung beispielsweise aufgrund einer fehlerhaften Bedienung des Nutzers, aufgrund einer Gewalteinwirkung auf das elektronische Gerät durch den Nutzer oder durch eine sonstige nicht zulässige Manipulation des Gerätes durch den Nutzer ausgeschlossen werden muss.

Es ist daher notwendig zur Unterbindung von Missbrauch das defekte elektronische Nutzerendgerät seitens des Gerätehändlers körperlich entgegenzunehmen. Anschließend erfolgt durch den Gerätehändler oder direkt durch den Gerätehersteller eine Prüfung des aufgetretenen Defektes. Ist das elektronische Nutzerendgerät tatsächlich defekt, wird es von dem Gerätehersteller entsorgt, wobei gegebenenfalls Teile des Endgerätes recycled werden. Anschließend erhält der Nutzer ein Austauschgerät bzw. ein Ersatzgerät von dem Gerätehersteller zugesandt. Die herkömmliche Vorgehensweise erfordert eine Logistikkette von dem Hersteller des Gerätes bis hin zum Kunden sowie eine weitere Logistikkette vom Kunden hin zum Hersteller des Gerätes bzw. zu einem von dem Hersteller autorisierten Dienstleister für die Gewährleistungsabwicklung. Der Aufwand zur Handhabung defekter elektronischer Nutzerendgeräte ist aufgrund der notwendigen Logistikkette und der damit verbundenen informationstechnischen Überwachsungssysteme erheblich. Darüber hinaus weist die herkömmliche Vorgehensweise den Nachteil auf, dass die Zeitdauer, bis der Nutzer ein einwandfrei funktionsfähiges Nutzerendgerät als Austauschgerät für ein defektes elektronisches Nutzerendgerät erhält, oft relativ groß ist und einige Wochen dauern kann. In diesem Zeitraum verfügt der Nutzer über kein entsprechendes elektronisches Nutzerendgerät, sondern muss vielmehr auf das Ersatzgerät warten.

Es ist daher Aufgabe der vorliegenden Erfindung ein Verfahren und ein System zur Handhabung von defekten elektronischen Nutzerendgeräten zu schaffen, welches die oben genannten Nachteile vermeidet und insbesondere den Aufwand für den Hersteller des Nutzerendgerätes und/oder dessen Gerätehändler bei der Handhabung defekter elektronischer Nutzerendgeräte reduziert.

Diese Aufgabe wird erfindungsgemäß mit einem System mit den in Anspruch 1 angegebenen Merkmalen gelöst.

Die Erfindung schafft demnach ein System zur Handhabung eines zumindest teilweise defekten elektronischen Nutzerendgerätes, wobei das elektronische Nutzerendgerät nach dessen erfolgreicher Identifizierung durch einen Server automatisch unumkehrbar in einen nicht instandsetzbaren Zustand, insbesondere einen wirtschaftlich nicht sinnvoll instandsetzbaren Zustand, versetzt wird, falls eine durchgeführte Diagnose funktionsrelevanter Schaltkreise des Nutzerendgerätes ergibt, dass diese funktionsrelevanten Schaltkreise in ihrer Funktionsfähigkeit beeinträchtigt oder ausgefallen sind.

Die Versetzung des Nutzerendgerätes in einen nicht instandsetzbaren Zustand erfolgt insbesondere dann, wenn der Aufwand bzw. die Kosten einer Instandsetzung den Wert des instandgesetzten Nutzerendgeräts erreichen oder übersteigen würden.

In einer möglichen Ausführungsform des erfindungsgemäßen Systems ist der Server ein Server eines Geräteherstellers des jeweiligen defekten elektronischen Nutzerendgerätes.

In einer weiteren möglichen Ausführungsform des erfindungsgemäßen Systems ist der Server ein Server des Gerätehändlers des betroffenen defekten elektronischen Nutzerendgerätes.

Bei einer weiteren möglichen Ausführungsform des erfindungsgemäßen Systems, ist der Server des Geräteherstellers bzw. Gerätehändlers mit dem Nutzerendgerät über eine Schnittstelle des Nutzerendgerätes verbunden.

Bei dieser Schnittstelle kann es sich um eine drahtgebundene oder drahtlose Schnittstelle handeln.

In einer weiteren möglichen Ausführungsform des erfindungsgemäßen Systems weist das elektronische Nutzerendgerät neben den funktionsrelevanten Schaltkreisen zusätzlich mindestens einen sicherheitsrelevanten Schaltkreis auf.

Bei einer möglichen Ausführungsform des erfindungsgemäßen Systems überträgt der sicherheitsrelevante Schaltkreis des elektronischen Nutzerendgerätes einen eindeutigen Identifizierer des Nutzerendgerätes zu dessen Identifizierung bei dem Server, selbst wenn eine Stromversorgung des elektronischen Nutzerendgerätes oder funktionsrelevante Schaltkreise des Nutzerendgerätes ausgefallen sind.

In einer weiteren möglichen Ausführungsform des erfindungsgemäßen Systems ist der eindeutige Identifizierer des Nutzerendgerätes ein in einem Speicher des Nutzerendgerätes gespeicherter Gerätecode.

In einer möglichen Ausführungsform des erfindungsgemäßen Systems wird der in dem Speicher des Nutzerendgerätes gespeicherte Gerätecode aus einer Seriennummer des Nutzerendgerätes abgeleitet.

In einer weiteren möglichen Ausführungsform des erfindungsgemäßen Systems wird das elektronische Nutzerendgerät erst dann automatisch in den nicht instandsetzbaren Zustand versetzt, nachdem der Nutzer eine diesbezügliche Bestätigung an den Server übertragen hat.

Bei einer weiteren möglichen Ausführungsform des erfindungsgemäßen Systems veranlasst der Server, nach Bestätigung der Versetzung des Nutzerendgerätes in den nicht instandsetzbaren Zustand, den sicherheitsrelevanten Schaltkreis des Nutzerendgerätes dazu, eine unumkehrbare Manipulation an mindestens einem Bauteil des Nutzerendgerätes vorzunehmen, die das Nutzerendgerät in den nicht instandsetzbaren Zustand irreversibel versetzt.

In einer weiteren möglichen Ausführungsform des erfindungsgemäßen Systems umfasst die unumkehrbare Manipulation die Zerstörung eines elektronischen Bauteils, insbesondere einer Sicherung innerhalb des Nutzerendgerätes.

In einer weiteren möglichen Ausführungsform des erfindungsgemäßen Systems umfasst die unumkehrbare Manipulation die Überschreibung von gespeicherten Konfigurationsdaten des Nutzerendgerätes.

In einer weiteren möglichen Ausführungsform des erfindungsgemäßen Systems wird bezüglich des zumindest teilweise defekten Nutzerendgerätes nach Aufbau einer Verbindung zwischen dem betroffenen Nutzerendgerät und dem Server ein Datensatz zur Durchführung eines Datenabgleichs hinsichtlich des Vorliegens eines Gewährleistungsfalles an den Server übertragen.

In einer möglichen Ausführungsform des erfindungsgemäßen Systems weist der an den Server übertragenen Datensatz auf: nutzerspezifische Daten des Nutzers,
gerätespezifische Daten des Nutzerendgerätes, insbesondere den eindeutigen Identifizierer des Nutzerendgerätes, fehlerspezifische Daten zur Angabe von an dem Nutzerendgerät aufgetretenen technischen Störungen und Störungsumständen sowie
verkaufsspezifische Daten zur Angabe eines Kaufvorganges zum Kauf des Nutzerendgerätes durch den Nutzer von einem Gerätehändler oder dem Gerätehersteller.

In einer weiteren möglichen Ausführungsform des erfindungsgemäßen Systems liefern an dem Nutzerendgerät vorgesehene Sensoren Sensordaten an den Server, die aufgetretene externe Einwirkungen auf das Nutzerendgerät, insbesondere mechanische Gewalteinwirkungen und Feuchtigkeitseinwirkungen, anzeigen.

In einer weiteren möglichen Ausführungsform des erfindungsgemäßen Systems werden durch den Server die in dem Datensatz enthaltenen fehlerspezifischen Daten und die von den Sensoren des Nutzerendgerätes erhaltenen Sensordaten ausgewertet, um festzustellen, ob diese Daten zueinander kompatibel sind.

In einer weiteren möglichen Ausführungsform des erfindungsgemäßen Systems wird die Diagnose der funktionsrelevanten Schaltkreise innerhalb des Nutzerendgerätes hinsichtlich ihrer Funktionsfähigkeit durch den Server durchgeführt.

In einer weiteren möglichen Ausführungsform des erfindungsgemäßen Systems wird die Diagnose der funktionsrelevanten Schaltkreise innerhalb des Nutzerendgerätes hinsichtlich ihrer Funktionsfähigkeit durch den sicherheitsrelevanten Schaltkreis des Nutzerendgerätes durchgeführt.

In einer weiteren möglichen Ausführungsform des erfindungsgemäßen Systems wird die Diagnose der funktionsrelevanten Schaltkreise des Nutzerendgerätes interaktiv mit dem Nutzer durchgeführt, indem der Nutzer nach Aufforderung bestimmte Aktionen an dem Nutzerendgerät vornimmt.

In einer weiteren möglichen Ausführungsform des erfindungsgemäßen Systems ist der sicherheitsrelevante Schaltkreis in dem Nutzerendgerät selbst integriert.

In einer weiteren möglichen Ausführungsform des erfindungsgemäßen Systems ist der sicherheitsrelevante Schaltkreis in einem mit dem Nutzerendgerät verbundenen Bauteil integriert.

In einer möglichen Ausführungsform des erfindungsgemäßen Systems handelt es sich bei dem mit dem Nutzerendgerät verbundenen Bauteil um einen Netzstecker, einen Adapter oder um ein Verbindungskabel.

In einer weiteren möglichen Ausführungsform des erfindungsgemäßen Systems betätigt der Nutzer zur Bestätigung der Versetzung des Nutzerendgerätes in den nicht instandsetzbaren Zustand mindestens eine an dem Nutzerendgerät angebrachte Taste manuell.

In einer weiteren möglichen Ausführungsform des erfindungsgemäßen Systems ist das elektronische Nutzerendgerät ein tragbares Nutzerendgerät, das über eine Schnittstelle an einem Computer angeschlossen ist, der über ein Netzwerk, insbesondere ein Daten oder Telefonnetz, mit dem Server verbunden ist.

In einer weiteren möglichen Ausführungsform des erfindungsgemäßen Systems überträgt der sicherheitsrelevante Schaltkreis des Nutzerendgerätes nach erfolgter Versetzung des Nutzerendgerätes in den nicht instandsetzbaren Zustand eine entsprechende Rückmeldung an dem Server.

In einer weiteren möglichen Ausführungsform des erfindungsgemäßen Systems veranlasst der Server nach Empfang der Rückmeldung einen Versand eines Austausch-Nutzerendgerätes zum Ersatz des in den nicht instandsetzbaren Zustand versetzten Nutzerendgerätes an den Nutzer.

Die Erfindung schafft ferner ein Verfahren, mit den in Patentanspruch 19 angegebenen Merkmalen.

Die Erfindung schafft demnach ein Verfahren zur Handhabung eines zumindest teilweise defekten elektronischen Nutzerendgerätes,
wobei das elektronische Nutzerendgerät nach dessen erfolgreicher Identifizierung durch einen Server automatisch unumkehrbar in einen nicht instandsetzbaren Zustand versetzt wird, falls eine durchgeführte Diagnose funktionsrelevanter Schaltkreise des Nutzerendgerätes ergibt, dass diese funktionsrelevanten Schaltkreise in ihrer Funktionsfähigkeit beeinträchtigt oder ausgefallen sind.

Die Erfindung schafft ferner ein elektronisches Nutzerendgerät mit den in Patentanspruch 20 angegebenen Merkmalen.

Die Erfindung schafft demnach ein elektronisches Nutzerendgerät mit funktionsrelevanten Schaltkreisen und mit mindestens einem sicherheitsrelevanten Schaltkreis,
wobei das elektronische Nutzerendgerät nach seiner erfolgreichen Identifizierung gegenüber einem Server automatisch in einen nicht instandsetzbaren Zustand, d. h. insbesondere einen nicht wirtschaftlich sinnvoll instandsetzbaren Zustand, versetzt wird, falls eine durchgeführte Diagnose funktionsrelevanter Schaltkreise des Nutzerendgerätes ergibt, dass diese funktionsrelevanten Schaltkreise in ihrer Funktionsfähigkeit beeinträchtigt oder ausgefallen sind.

Die Erfindung schafft ferner einen Server zur Handhabung eines zumindest teilweise defekten elektronischen Nutzerendgerätes mit den in Patentanspruch 21 angegebenen Merkmalen.

Die Erfindung schafft demnach einen Server zur Handhabung eines zumindest teilweise defekten elektronischen Nutzerendgerätes,
wobei der Server das Versetzen des elektronischen Nutzerendgerätes nach dessen erfolgreicher Identifizierung in einen nicht instandsetzbaren Zustand veranlasst, falls eine durchgeführte Diagnose funktionsrelevanter Schaltkreise des Nutzerendgerätes ergibt, dass diese funktionsrelevanten Schaltkreise in ihrer Funktionsfähigkeit beeinträchtigt oder ausgefallen sind.

Weiterhin werden mögliche Ausführungsform des erfindungsgemäßen Verfahrens und des erfindungsgemäßen Systems zur Handhabung eines zumindest teilweise defekten elektronischen Nutzerendgerätes unter Bezugnahme auf die beigefügten Figuren näher erläutert.

Es zeigen:
- Fig. 1: ein Blockschaltbild zur Darstellung eines Ausführungsbeispiels eines erfindungsgemäßen elektronischen Nutzerendgeräts, wie es bei dem erfindungsgemäßen System und Verfahren verwendet werden kann;
- Fig. 2: ein Ablaufdiagramm zur Darstellung eines Ausführungsbeispiels des erfindungsgemäßen Verfahrens zur Handhabung eines zumindest teilweisen defekten elektronischen Nutzerendgerätes;
- Fig. 3: ein Blockschaltbild zur Darstellung einer Gerätevorbereitung, wie sie bei dem erfindungsgemäßen System und Verfahren erfolgen kann;
- Fig. 4: ein Blockschaltbild zur Erläuterung der Funktionsweise des erfindungsgemäßen Verfahrens und Systems zur Handhabung eines zumindest teilweise defekten elektronischen Nutzerendgerätes gemäß der Erfindung.

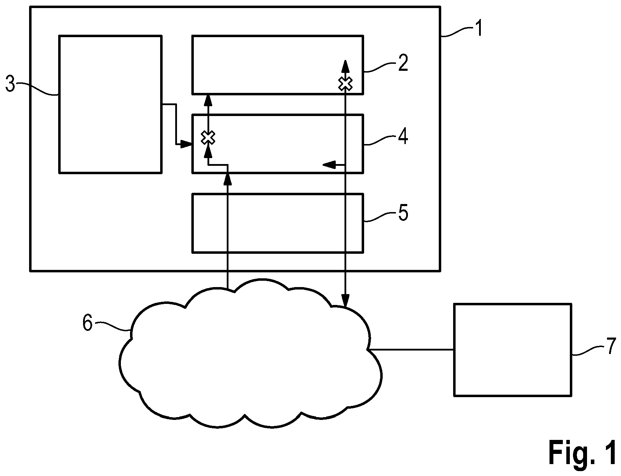

Fig. 1 zeigt beispielhaft eine Ausführungsform eines elektronischen Nutzerendgerätes 1 gemäß der Erfindung, wie es bei dem erfindungsgemäßen System und Verfahren Verwendung finden kann. Das elektronische Nutzerendgerät 1 ist beispielsweise eine Digitalkamera oder eine Computerspielkonsole. Weitere Beispiele für elektronische Nutzerendgeräte 1 sind Smartphones, tragbare Computer oder MP3-Spieler. Weiterhin kann es sich beispielsweise bei dem Nutzerendgerät 1 um ein Fernsehgerät oder eine Komponente einer Stereoanlage handeln. Das elektronische Nutzerendgerät 1 umfasst in dem in Fig. 1 dargestellten Ausführungsbeispiel funktionsrelevante Schaltkreise 2, welche technische Funktionen des jeweiligen Nutzerendgerätes 1 bereitstellen. Funktionsrelevante Schaltkreise 2 sind beispielsweise Schaltungsplatinen oder sonstige elektronische Bauteile des Nutzerendgerätes 1. Das Nutzerendgerät 1 kann eine Vielzahl unterschiedlicher funktionsrelevanter Schaltkreise 2 beinhalten. Die funktionsrelevanten Schaltkreise 2 des Nutzerendgerätes 1 werden durch eine Stromversorgungseinheit 3 mit Energie versorgt.

Bei dem in Fig. 1 dargestellten Ausführungsbeispiel enthält das Nutzerendgerät 1 neben den funktionsrelevanten Schaltkreisen 2 zusätzlich mindestens einen sicherheitsrelevanten Schaltkreis 4. In dem in Fig. 1 dargestellten Ausführungsbeispiel ist der sicherheitsrelevante Schaltkreis 4 zwischen einer Schnittstelle 5 des Nutzerendgerätes 1 und den funktionsrelevanten Schaltkreisen 2 vorgesehen. Bei der Schnittstelle 5 handelt es sich beispielsweise um eine USB- oder HMI-Schnittstelle. Die Schnittstelle 5 ist in einer möglichen Ausführungsform eine drahtgebundene Schnittstelle. In einer weiteren möglichen Ausführungsform ist die Schnittstelle 5 eine drahtlose Funkschnittstelle. Das Nutzerendgerät 1 verfügt über eine oder mehrere gleichartiger oder verschiedenartiger Schnittstellen 5. Wie man in Fig. 1 erkennen kann, kann das Nutzerendgerät 1 mit einem Netzwerk 6 verbunden werden. Bei diesem Netzwerk 6 handelt es sich beispielsweise um ein Datennetzwerk, insbesondere das Internet. Bei einem Datennetzwerk 6 kann es sich auch um ein lokales Netzwerk LAN handeln. Weiterhin kann das Netzwerk 6 bei einer möglichen Ausführungsform ein Telefonnetz sein. In einer weiteren möglichen Ausführungsform des erfindungsgemäßen Nutzerendgerätes 1 erfolgt die Stromversorgung der funktionsrelevanten Schaltkreise 2 innerhalb des Nutzerendgerätes 1 ebenfalls über die Schnittstelle 5, beispielsweise über eine USB-Schnittstelle. Das elektronische Nutzerendgerät 1 enthält neben den für seine Funktion notwendigen funktionsrelevanten Schaltkreisen 2 in einer möglichen Ausführungsform in einem separaten Bereich eine oder mehrere sicherheitsrelevante Schaltkreise 4. Dieser Bereich kann sowohl durch die geräteinterne Stromversorgung 3 als auch über die externe Schnittstelle 5 oder einem Ladeadapter mit der notwendigen Betriebsspannung versorgt werden. Das Nutzerendgerät 1 kann über das Netzwerk 6 eine Datenverbindung zu einem Server 7 aufbauen, wie in Fig. 1 dargestellt. Bei dem Server 7 kann es sich um den Server des Geräteherstellers des jeweiligen Nutzerendgerätes 1 handeln. Weiterhin kann es sich bei dem Server 7 um den Server eines Gerätehändlers handeln, der das Nutzerendgerät 1 an den Nutzer verkauft hat. Weiterhin kann es sich bei dem Server 7 in einer weiteren möglichen Ausführungsform des erfindungsgemäßen Systems um den Server eines Dienstleisters handeln, der durch den Gerätehändler oder den Gerätehersteller zur Durchführung eines Gewährleistungsprozesses beauftragt worden ist.

Das erfindungsgemäße System zur Handhabung eines zumindest teilweise defekten elektronischen Nutzerendgerätes 1 weist mindestens einen Server 7 auf, bei dem es sich beispielsweise um den Server des Geräteherstellers handelt. Der Server 7 ist mit dem Nutzerendgerät 1 über die Schnittstelle 5 des Nutzerendgerätes 1 verbindbar. Ist das Nutzerendgerät 1 zumindest teilweise defekt, wird zunächst direkt oder indirekt eine Datenverbindung zwischen Nutzerendgerät 1 und dem Server 7 hergestellt. Daraufhin identifiziert sich das elektronische Nutzerendgerät 1 gegenüber dem Server 7. Die Identifizierung kann durch den sicherheitsrelevanten Schaltkreis 4 erfolgen. Nach erfolgreicher Identifizierung des Nutzerendgerätes 1 gegenüber dem Server 7 wird eine Diagnose der funktionsrelevanten Schaltkreise 2 des Nutzerendgerätes 1 durchgeführt. Falls diese Diagnose der funktionsrelevanten Schaltkreise 2 des Nutzerendgerätes 1 ergibt, dass diese funktionsrelevanten Schaltkreise 2 in ihrer Funktionsfähigkeit beeinträchtigt oder vollständig ausgefallen sind, veranlasst der Server 7 automatisch eine Versetzung des Nutzerendgerätes 1 in einen nicht instandsetzbaren Zustand. Hierzu kann der Server 7 einen Steuerbefehl an den sicherheitsrelevanten Schaltkreis 4 senden. Der nicht instandsetzbare Zustand ist irreversibel bzw. unumkehrbar. Das Versetzen des Nutzerendgerätes 1 in den unumkehrbaren nicht instandsetzbaren Zustand erfolgt vorzugsweise erst, nachdem das elektronische Nutzerendgerät 1 sich gegenüber dem Server 7 erfolgreich identifiziert hat und die darauffolgende Diagnose der funktionsrelevanten Schaltkreise 2 ergeben hat, dass mindestens einer der funktionsrelevanten Schaltkreise 2 in seiner Funktionsfähigkeit beeinträchtigt oder sogar vollständig ausgefallen ist und eine Instandsetzung wirtschaftlich nicht sinnvoll ist.

In einer möglichen Ausführungsform wird das elektronische Nutzerendgerät 1 erst dann automatisch in den nicht instandsetzbaren Zustand versetzt, nachdem der Nutzer eine diesbezügliche Bestätigung an den Server 7 übertragen hat. Mit dieser Bestätigung erklärt sich der Nutzer mit der Vornahme der unumkehrbaren Manipulation an seinem Benutzerendgerät 1 einverstanden. Dem Benutzer kann der Hersteller vor der Manipulation des Endgerätes die Bestätigung der kaufmännischen Prüfung der Gewährleistungsansprüche zukommen lassen, z.B. als Mail.

Wie in Fig. 1 dargestellt, weist das elektronische Nutzerendgerät 1 in den funktionsrelevanten Schaltkreisen zusätzlich den mindestens einen sicherheitsrelevanten Schaltkreis 4 auf, der bei einer möglichen Ausführungsform einen eindeutigen Identifizierer des Nutzerendgerätes 1 zu dessen Identifizierung auf einen Server 7 automatisch überträgt. Die Übertragung des eindeutigen Identifizierers des Nutzerendgerätes 1 durch den sicherheitsrelevanten Schaltkreis 4 erfolgt vorzugsweise selbst wenn eine Stromversorgung des elektronischen Nutzerendgerätes 1 und seiner funktionsrelevanten Schaltkreise 2 ausgefallen ist. In dieser Ausführungsform wird der sicherheitsrelevante Schaltkreis 4 vorzugsweise über die externe Schnittstelle 5 oder einer separaten Batterie mit Strom versorgt, so dass er stets in der Lage ist den eindeutigen Identifizierer des Nutzerendgerätes 1 an den Server 7 über die Schnittstelle 5 zu übertragen. In einer möglichen Ausführungsform ist dieser eindeutige Identifizierer des Nutzerendgerätes 1 in einem Speicher des Nutzerendgerätes 1 gespeichert, auf den der sicherheitsrelevante Schaltkreis 4 Zugriff hat. Bei diesem eindeutigen Identifizierer handelt es sich bei einer möglichen Ausführungsform um einen Gerätecode GC, der aus einer Seriennummer SN des Nutzerendgerätes 1 abgeleitet sein kann. Der Gerätecode GC wird zur Identifizierung des Nutzerendgerätes 1 gegenüber dem Server 7 von dem sicherheitsrelevanten Schaltkreis 4 über die Schnittstelle 5 und das Netzwerk 6 an dem Server 7 übertragen und dort geprüft. Nach erfolgreicher Identifizierung des Nutzerendgerätes 1 durch den Server 7, beispielsweise durch den Server des Geräteherstellers, erfolgt die Diagnose der funktionsrelevanten Schaltkreise 2 des Nutzerendgerätes 1. In einer möglichen Ausführungsform erfolgt die Diagnose der funktionsrelevanten Schaltkreise 2 innerhalb des Nutzerendgerätes 1 hinsichtlich ihrer Funktionsfähigkeit durch den entfernten Server 7 über das Netzwerk 6. In einer alternativen Ausführungsform des erfindungsgemäßen Systems erfolgt die Diagnose der funktionsrelevanten Schaltkreise 2 innerhalb des Nutzerendgerätes 1 hinsichtlich ihrer Funktionsfähigkeit durch den sicherheitsrelevanten Schaltkreis 4 innerhalb des Nutzerendgerätes 1.

Die Diagnose der funktionsrelevanten Schaltkreise 4 des Nutzerendgerätes 1 kann in einer möglichen Ausführungsform interaktiv durchgeführt werden, indem der Nutzer nach Aufforderung bestimmte Aktionen an dem Nutzerendgerät 1 vornimmt. Beispielsweise kann der Nutzer durch den entfernten Server 7 oder von einer in dem sicherheitsrelevanten Schaltkreis 4 durchgeführten Routine dazu aufgefordert werden, für den Fehlerfall relevante Aktionen an dem Nutzerendgerät 1 vorzunehmen, beispielsweise bei Ausfall einer Kamera an dem Nutzerendgerät 1 den zugehörigen Auslöser zu drücken. Weiterhin kann beispielsweise der Nutzer dazu aufgefordert werden, bei Defekt eines Mikrofons des Nutzerendgerätes 1 ein Geräusch zu machen oder dergleichen.

Sobald der Server 7 von dem Nutzer die Bestätigung zum Versetzen seines Nutzerendgerätes 1 in den nicht instandsetzbaren Zustand erhalten hat, wird eine unumkehrbare Manipulation an mindestens einem Bauteil des Nutzerendgerätes 1 vorgenommen, so dass das Nutzerendgerät 1 endgültig für den Nutzer unbrauchbar gemacht wird. Die unumkehrbare Manipulation besteht beispielsweise in der Zerstörung eines elektronischen Bauteils, beispielsweise einer in einem Schaltkreis vorgesehenen elektronischen Sicherung. Die zur Zerstörung der elektronischen Sicherung notwendige Energie kann der sicherheitsrelevante Schaltkreis 4 z.B. über die Schnittstelle 5 von außen beziehen.

Weiterhin ist es bei einer alternativen Ausführungsform möglich, gespeicherte Konfigurationsdaten in einem Konfigurationsdatenspeicher des Nutzerendgerätes 1 unumkehrbar zu überschreiben. Technische Veränderungen, die das Nutzerendgerät 1 in den nicht mehr instandsetzbaren Zustand versetzen, können eine oder mehrere Maßnahmen im Nutzerendgerät 1 betreffen. Vorzugsweise können an einer oder mehreren Stellen des Nutzerendgerätes 1 Schmelzsicherungen zum Durchbrennen gebracht werden, die funktionale Bereiche des Nutzerendgerätes bzw. funktionsrelevante Schaltkreise 2 isolieren bzw. stilllegen, wobei die funktionalen Bereiche nicht durch einfache Maßnahmen wieder ersetzt werden können. Die vorgesehenen Schmelzsicherungen können beispielsweise in einzelnen Schaltkreisen bzw. Chips integriert sein. Weiterhin ist es möglich durch Spannungsumkehr für gewisse Schaltkreise diese vollständig zu zerstören bzw. unbrauchbar zu machen.

In einer weiteren möglichen Ausführungsform des erfindungsgemäßen Systems wird bezüglich des zumindest teilweise defekten Nutzerendgerätes 1 auch bei einer Verbindung zwischen dem betroffenen Nutzerendgerät 1 und dem Server 7 ein Datensatz zur Durchführung eines Datenabgleichs hinsichtlich des möglichen Vorliegens eines Gewährleistungsfalles von dem Nutzerendgerät an den Server 7 übertragen. Dieser von dem Nutzerendgerät 1 an den Server 7 übertragene Datensatz weist bei einer möglichen Ausführungsform nutzerspezifische Daten des Nutzers auf, beispielsweise dessen Name, Adresse oder Kundennummer. Weiterhin kann der für den Datenabgleich übertragene Datensatz gerätespezifische Daten des Nutzerendgerätes umfassen, insbesondere den eindeutigen Identifizierer bzw. den Gerätecode GC des Nutzerendgerätes 1. Darüber hinaus kann der übertragene Datensatz fehlerspezifische Daten enthalten. Die fehlerspezifischen Daten enthalten Angaben bezüglich der an dem Nutzerendgerät 1 aufgetretenen technischen Störungen und Störungsumstände. Diese fehlerspezifischen Daten können bei einer möglichen Ausführungsform durch den Nutzer über eine Nutzerschnittstelle des Nutzerendgerätes 1, beispielsweise über eine Tastatur, eingegeben werden und an den Server 7 übertragen werden. In einer weiteren möglichen Ausführungsform kann das Nutzerendgerät 1 über seine Schnittstelle 5 auch mit einem lokalen Rechner, beispielsweise Computer, verbunden werden, der über eine entsprechende Tastatur bzw. Nutzerschnittstelle verfügt. Auf diese Weise ist es dem Nutzer möglich, den aufgetretenen Fehler bzw. die aufgetretene Beeinträchtigung an dem Nutzerendgerät 1 zu beschreiben, beispielsweise in einer Textbeschreibung. Darüber hinaus kann der Nutzer Angaben zu dem Störumständen geben. Beispielsweise kann der Nutzer erklären, dass das Gerät versehentlich auf den Boden gefallen ist. In einer weiteren möglichen Ausführungsform des erfindungsgemäßen Systems weist der für den Datenabgleich übertragene Datensatz verkaufsspezifische Daten zur Angabe eines Kaufvorgangs auf. Diese verkaufsspezifischen Daten enthalten Daten zum Kauf des Nutzerendgerätes 1 durch den Nutzer von einem Gerätehändler oder dem Gerätehersteller. Diese Daten umfassen beispielsweise einen Verkaufsbeleg oder eine Kreditkartentransaktionsnummer.

Bei einer weiteren möglichen Ausführungsform des erfindungsgemäßen Systems verfügt das Nutzerendgerät 1 über zusätzlich darin integrierte oder daran anschließbare Sensoren. Diese Sensoren liefern bei einer möglichen Ausführungsform Sensordaten an den Server 7. Beispielsweise können die Sensoren aufgetretene externe Einwirkungen, insbesondere mechanische Gewalteinwirkung auf das Nutzerendgerät 1 sowie Feuchtigkeitseinwirkungen, sensorisch erfassen und die entsprechenden Sensordaten an den Server 7 liefern. Mit Hilfe der empfangenen Sensordaten 7 können auf diese Weise mögliche Fallschock- oder Wassereinwirkungen auf das Nutzerendgerät 1 festgestellt werden. Die Daten können gegebenenfalls zu einem Ausschluss der Gewährleistungsansprüche bzw. dazu führen, dass das fehlerhafte Gerät 1 seitens des Geräteherstellers nicht gegen ein funktionsfähiges Nutzerendgerät 1 ausgetauscht wird.

Bei einer weiteren möglichen Ausführungsform des erfindungsgemäßen Systems können durch den Server 7 die in einem Datensatz enthaltenen fehlerspezifischen Daten sowie die von den Sensoren des Nutzerendgeräts erhaltenen Sensordaten ausgewertet und miteinander verglichen werden, um festzustellen, ob diese Daten zueinander kompatibel sind. Macht beispielsweise der Nutzer die Angabe, dass keine besonderen Störumstände aufgetreten sind und lassen die Sensordaten gleichzeitig die Schlussfolgerung zu, dass das betroffene Nutzerendgerät 1 massiv gewalttätig beschädigt wurde, kann der Gerätehersteller den Angaben des Nutzers nicht ohne Weiteres Glauben schenken, und eine nähere Untersuchung des Nutzerendgerätes 1 wird notwendig.

Bei dem in Fig. 1 dargestellten Ausführungsbeispiel befindet sich der sicherheitsrelevante Schaltkreis 4 innerhalb des Nutzerendgerätes 1. In einer alternativen Ausführungsform des erfindungsgemäßen Systems kann sich der sicherheitsrelevante Schaltkreis ganz oder teilweise in einem mit dem Nutzerendgerät 1 verbundenen Bauteil befinden. In dieser Ausführungsform befindet sich der sicherheitsrelevante Schaltkreis 4 beispielsweise in einem Netzstecker des Nutzerendgerätes 1, in einem Adapter des Nutzerendgerätes 1 oder in einem Verbindungskabel. Beispielsweise befindet sich der sicherheitsrelevante Schaltkreis 4 in einem USB-Adapter.

In dem sicherheitsrelevanten Schaltkreis 4 können ein oder mehrere Sensoren vorhanden sein, um Gewalteinwirkungen oder Feuchtigkeitseinflüsse auf das Nutzerendgerät 1 sensorisch zu erfassen. Der sicherheitsrelevante Schaltkreis 4 erfüllt somit verschiedene Funktionen, nämlich das Nutzerendgerät 1 eindeutig mit Hilfe des Gerätecodes GC gegenüber dem Server 7 zu identifizieren sowie mittels Sensoren mögliche Einwirkungen wie Gewalt, Schock, Wassereinfluss im Inneren des Gehäuses oder dergleichen festzustellen. Weiterhin überprüft der sicherheitsrelevante Schaltkreis 4 durch eine Abfrage die Funktionalität von Bauteilen oder Baugruppen hinsichtlich ihrer Funktionsfähigkeit innerhalb der funktionsrelevanten Schaltkreise 2. Mit Hilfe des zusätzlichen sicherheitsrelevanten Schaltkreises 4 ist das Nutzerendgerät 1 in der Lage auch bei Ausfall der funktionsrelevanten Bereiche bzw. funktionsrelevanten Schaltkreise 2 oder bei Ausfall der Stromversorgung 3 zu kommunizieren. Ist beispielsweise das Nutzerendgerät 1 mittels eines USB-Ports oder einer WLAN- oder Bluetooth-Schnittstelle oder über ein Ladegerät mit einem PC verbunden, kann das Nutzerendgerät 1 über den angeschlossenen PC mit der Datenverarbeitungsplattform des Geräteherstellers kommunizieren. Die Diagnose der funktionsrelevanten Schaltkreise 2 wird in einer möglichen Ausführungsform durch den sicherheitsrelevanten Schaltkreis 4 ausgeführt. In einer alternativen Ausführungsform wird die Diagnose der funktionsrelevanten Schaltkreise nach Aufbau der Verbindung durch den Server 7 ausgeführt. In einer weiteren möglichen Ausführungsform erfolgt eine zweistufige Diagnose sowohl durch den sicherheitsrelevanten Schaltkreis 4 und anschließend durch den entfernten Server 7. In einer möglichen Ausführungsform werden die Diagnoseergebnisse dieser zweistufigen Diagnose miteinander verglichen. Hierdurch kann die Sicherheit bei der Bestimmung des aufgetretenen Fehlers erhöht werden.

In einer weiteren möglichen Ausführungsform des erfindungsgemäßen Systems überträgt der sicherheitsrelevante Schaltkreis 4 des Nutzerendgerätes 1 nach erfolgter Versetzung des Nutzerendgerätes 1 in den nicht instandsetzbaren Zustand eine entsprechende Rückmeldung an den Server 7. Daraufhin kann der Server 7 nach dem Empfang der Rückmeldung einen Versand eines Austausch-Nutzerendgerätes als Ersatz des in den nicht instandsetzbaren Zustand versetzten Nutzerendgerätes 1 an den Nutzer veranlassen. Das Austausch-Nutzerendgerät kann dabei von dem Gerätehersteller in einer möglichen Ausführung direkt an die Adresse des Nutzers, die in den nutzerspezifischen Daten des Datensatzes enthalten waren, versendet werden. Alternativ kann der Nutzer auch elektronisch eine Bestätigung von dem Server 7 des Geräteherstellers erhalten, die es ihm erlauben bei einem naheliegenden Gerätehändler ein entsprechendes Austausch-Nutzerendgerät zu erhalten. In einer möglichen Ausführungsform des erfindungsgemäßen Systems erfolgt eine Diagnose und Analyse eines aufgetretenen Fehlers durch eine Software-Routine, die durch den sicherheitsrelevanten Schaltkreis 4 und/oder durch den Server 7 des Geräteherstellers ausgeführt wird. Wenn die Diagnose und Analyse bezüglich eines Defekts vorliegt und aufgrund des Datensatzes tatsächlich ein Gewährleistungsanspruch seitens des Nutzers besteht, kann bei einer möglichen Ausführungsform durch den sicherheitsrelevanten Schaltkreis 4 und/oder den Server 7 versucht werden durch Aufspüren eines Softwarepatches oder einer Softwareupdateversion den aufgetretenen Fehler zu beheben. In dieser Ausführungsform erfolgt somit das unumkehrbare Versetzen des defekten Nutzerendgerätes 1 erst nachdem ein entsprechender Reparaturversuch seitens des sicherheitsrelevanten Schaltkreises 4 und/oder des Servers 7 gescheitert ist. In diesem Fall wird der Nutzer bei eine möglichen Ausführungsform zunächst gefragt, ob er mit der weiteren Vorgehensweise einverstanden ist, nämlich der Versetzung seines Nutzerendgerätes in den nicht instandsetzbaren, vollständig zerstörten Zustand und den Erhalt eines Tauschgeräts, gegebenenfalls eines ähnlichen Gerätes zur Erfüllung des bestehenden Gewährleistungsanspruches. Weiterhin kann der Nutzer dazu verpflichtet werden, das betroffene Gerät 1 entsprechend den nationalen Gesetzen oder Richtlinien zu entsorgen bzw. zu recyclen. In einer möglichen Ausführungsform wird nach der Bestätigung des Nutzers zu diesem Prozess seitens des Servers 7 eine Routine ausgelöst, die in dem Nutzerendgerät 1 eine unumkehrbare Manipulation herbeiführt, die das Nutzerendgerät 1 endgültig unbrauchbar macht. Diese Bestätigung des Nutzers kann bei einer möglichen Ausführungsform über eine Tastenabfrage oder Nummerneingabe an dem Nutzerendgerät 1 selbst oder einem mit dem Nutzerendgerät 1 verbundenen Gerät, beispielsweise einem PC, erfolgen. Die Tastenabfrage bietet den Vorteil, dass eine manuelle, schwer emulierbare Funktion für die Zerstörung des Nutzerendgerätes 1 notwendig ist, die nicht von Viren oder anderer Schadsoftware durch Dritte missbräuchlich genutzt werden kann, um die Geräte des Herstellers zu zerstören und den Hersteller somit zu schädigen.

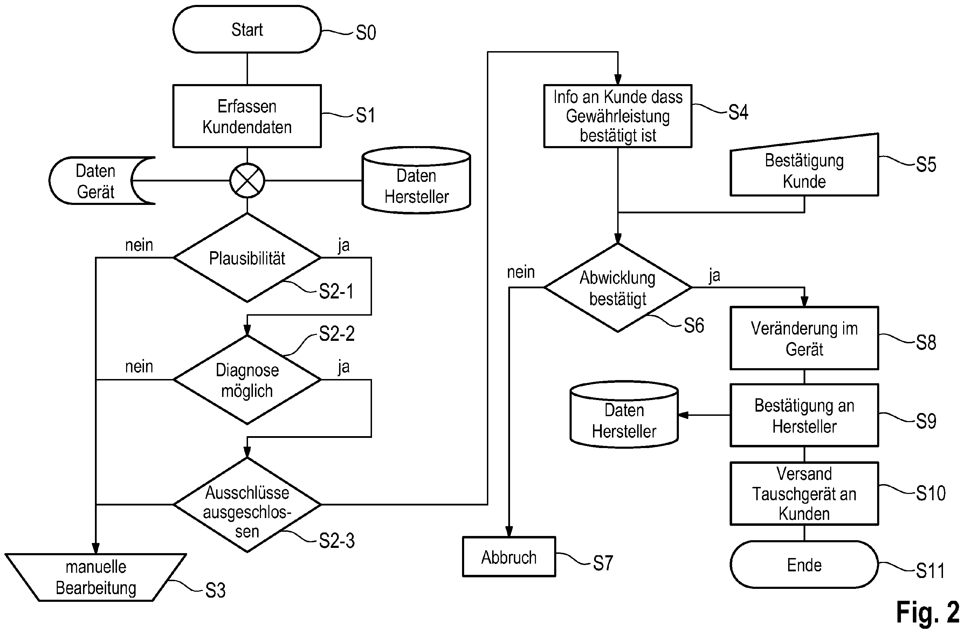

Fig. 2 zeigt ein Ablaufdiagramm zur Darstellung eines Ausführungsbeispiels des erfindungsgemäßen Verfahrens zur Handhabung eines zumindest teilweise defekten elektronischen Nutzerendgerätes 1. Zunächst werden nach einem Startschritt S0 die Nutzerdaten des Nutzers in einem Schritt S1 erfasst. Die nutzerspezifischen Daten können in einem Datensatz mit gerätespezifischen Daten des Nutzerendgerätes 1 und fehlerspezifischen Daten sowie verkaufsspezifischen Daten an den Server 7 des Geräteherstellers bzw. Gerätehändlers übertragen werden. Anhand der gerätespezifischen Daten des Nutzerendgerätes 1, insbesondere dem eindeutigen Identifizierer bzw. dem Geräte-code GC des Nutzerendgerätes 1 kann dort zunächst eine Identifizierung bzw. Authentisierung erfolgen. In einem Schritt S2-1 erfolgt dann anschließend eine Plausibilitätsprüfung der übertragenen Daten. Beispielsweise wird geprüft, ob die übertragene Seriennummer SN des Gerätes 1 mit dem beschriebenen Gerätetyp übereinstimmt. Weiterhin kann beispielsweise geprüft werden, ob die Seriennummer SN bzw. der Geräte-Code GC zu einem Gerät 1 gehört, das in dem jeweiligen Land, Region, Verkaufsgebiet tatsächlich ausgeliefert worden ist. Weiterhin kann beispielsweise anhand der verkaufsspezifischen Daten überprüft werden, ob tatsächlich ein entsprechender Verkaufsbeleg erstellt worden ist. In einer möglichen Ausführungsform greift hierzu der Server 7 auf eine Datenbank zu, in der die entsprechenden Daten durch die Gerätehersteller eingestellt worden sind. Weiterhin ist es möglich, dass der Server 7 eine entsprechende Anfrage an den Server des Gerätehändlers stellt.

Weiterhin kann in Schritt S2-1 beispielsweise anhand der nutzerspezifischen Daten geprüft werden, ob an die Adresse des Nutzers schon einmal ein Gerät im Rahmen eines Gewährleistungsfalles versandt worden ist oder nicht. Weiterhin kann sicherheitshalber überprüft werden, ob die angegebene Seriennummer SN schon einmal in einem Gewährleistungsfall angezeigt worden ist oder nicht. Zudem wird in einem weiteren Schritt geprüft, ob die Fehlerbeschreibung des Kunden hinsichtlich der aufgetretenen technischen Störungen mit dem Diagnoseergebnis und/oder den mitübertragenen Sensordaten kompatibel ist oder nicht. Vor der Vornahme der Diagnose kann in einem möglichen Schritt S2-2 geprüft werden, ob eine Diagnose an dem Nutzerendgerät 1 überhaupt für den aufgetretenen Fehler möglich ist. Weiterhin kann in einem weiteren Schritt S2-3 geprüft werden, ob Gewährleistungsansprüche ausgeschlossen sind. Kommt man in den Schritten S2-1, S2-2, S2-3 zu einem negativen Ergebnis, kann eine herkömmliche Behandlung des aufgetretenen Defektes an dem Nutzerendgerät 1 in Schritt S3 erfolgen. Ist die Plausibilitätsprüfung S2-1 erfolgreich, kann eine Diagnose des aufgetretenen Fehlers in Schritt S2-2 folgen. Wird im Schritt S2-3 festgestellt, dass die Gewährleistungsansprüche nicht ausgeschlossen sind, wird bei dem in Fig. 2 dargestellten Ausführungsbeispiel in Schritt S4 eine entsprechende Nachricht von dem Server 7 an den Nutzer des Endgerätes 1 übertragen und gegebenenfalls das Vorliegen eines Gewährleistungsanspruchs bestätigt. Daraufhin kann der Nutzer im Schritt S5 dazu aufgefordert werden, sich mit der weiteren Routine, d.h. dem Versetzen seines Gerätes in einen nicht instandsetzbaren Zustand, einverstanden zu erklären. Nach Eingabe einer derartigen Bestätigung des Kunden, beispielsweise durch Betätigung einer Taste an dem Nutzerendgerät 1 oder durch eine entsprechende Eingabe an einen mit dem Nutzerendgerät 1 verbundenen Computer in Schritt S5, wird in Schritt S6 seitens des Servers 7 geprüft, ob sich der Kunde mit der weiteren Abwicklung einverstanden erklärt hat oder nicht. Erklärt sich der Nutzer mit der weiteren Abwicklung nicht einverstanden, kann in einem Schritt S7 ein Abbruch erfolgen und gegebenenfalls zu der herkömmlichen Vorgehensweise übergegangen werden. Ist der Nutzer mit der weiteren Abwicklung des Gewährleistungsfalles einverstanden, wird in einem Schritt S8 das Nutzerendgerät 1 unumkehrbar bzw. irreversibel in einen nicht instandsetzbaren Zustand versetzt. Dies wird in einem Schritt S9, beispielsweise mit einer entsprechenden Bestätigung, in eine Datenbank des Geräteherstellers eingeschrieben. In einem weiteren Schritt S10 veranlasst der Server 7 daraufhin den Versand eines Tauschgerätes an den Nutzer des defekten Endgerätes 1. Der Vorgang endet in Schritt S11, wie in Fig. 2 dargestellt.

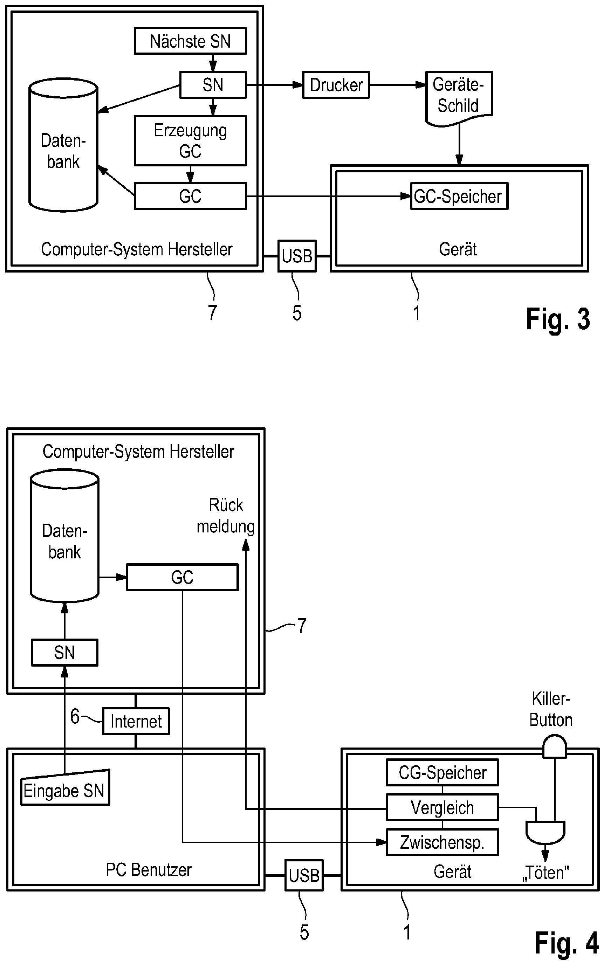

Fig. 3 zeigt ein Blockschaltbild zur Darstellung einer Gerätevorbereitung eines Nutzerendgerätes 1, wie es durch das erfindungsgemäße System bzw. Verfahren verwendet werden kann. In einem möglicherweise letzten Produktionsschritt bei der Herstellung des Nutzerendgerätes 1 erzeugt das Computersystem bzw. der Server 7 des Geräteherstellers einen Gerätecode GC und überträgt den generierten Gerätecode GC über eine Schnittstelle 5 des Nutzerendgerätes 1 an einen nichtflüchtigen Gerätecode-Speicher, wie in Fig. 3 dargestellt. Beispielsweise können Computersystemhersteller einen Gerätecode GC generieren, während das Schild mit einer Seriennummer SN des Nutzerendgerätes gedruckt und auf dem Gehäuse des Gerätes 1 angebracht wird. Die Seriennummer SN wird durch einen Drucker auf ein Geräteschild gedruckt und an dem Gehäuse des Nutzerendgerätes 1 angebracht, wie in Fig. 3 dargestellt. Weiterhin kann aus der Seriennummer SN bei dem in Fig. 3 dargestellten Ausführungsbeispiel der zugehörige Gerätecode GC automatisch generiert werden. In einer möglichen Ausführungsform wird der Gerätecode GC auf Basis der Seriennummer SN eines Verschlüsselungs- oder Mapping-Algorithmus generiert. In einer möglichen Ausführungsform ist der generierte Gerätecode GC aus Sicherheitsgründen sehr lang und weist beispielsweise 64 Bit auf. Der Gerätecode GC stellt eine eindeutige systeminterne Identifikation des durch den Gerätehersteller produzierten Nutzerendgerätes 1 dar. Jeder Seriennummer SN ist ein einziger Gerätecode GC zugeordnet. Die vergebenen Seriennummern SN und Gerätecodes GC werden, wie in Fig. 3 dargestellt, in einer Datenbank des Geräteherstellercomputersystems gespeichert.

Fig. 4 verdeutlicht ein Ausführungsbeispiel des erfindungsgemäßen Verfahrens und des erfindungsgemäßen Systems zur Handhabung eines zumindest teilweise defekten elektronischen Nutzerendgerätes 1. Tritt an dem Nutzerendgerät 1 eine Fehlfunktion auf, kann der Nutzer bei dem dargestellten Ausführungsbeispiel das Nutzerendgerät 1 über die Schnittstelle 5 des Nutzerendgerätes 1, beispielsweise eine USB-Schnittstelle, mit seinem PC verbinden. Anschließend gibt der Nutzer an dem PC die Seriennummer SN des Nutzerendgerätes 1 ein, die er beispielsweise an dem Geräteschild am Gehäuse des Gerätes 1 abliest. In einer alternativen Ausführungsform kann die Seriennummer SN auch in einem Speicher abgelegt sein und aus dem Nutzerendgerät 1 ausgelesen werden. Die Seriennummer SN wird über das Datennetzwerk, beispielsweise das Internet, an dem Server 7 des Geräteherstellers übertragen. Der Server 7 des Geräteherstellers hat Zugriff auf eine Datenbank und kann den zu der Seriennummer SN zugehörigen Gerätecode GC extrahieren und gegebenenfalls verschlüsselt über das Datennetzwerk bzw. das Internet an den PC des Nutzers sowie die Schnittstelle 5 des Nutzerendgerätes 1 in einen Zwischenspeicher innerhalb des Nutzerendgerätes 1 übertragen. Der Dateninhalt des Zwischenspeichers mit dem von dem Server 7 erhaltenen Gerätecode GC wird mit dem Gerätecode GC verglichen, der sich in dem Gerätecode-Speicher des Nutzerendgerätes 1 befindet. Dies kann beispielsweise mittels eines Komparators oder dergleichen geschehen. Das Vergleichsergebnis wird von dem Nutzerendgerät 1 über den PC und das Netzwerk zurück an den Server 7 des Computerherstellers übermittelt. Bei Übereinstimmung und entsprechender Rückmeldung wird der Systemserver des Geräteherstellers darüber informiert, dass es sich bei dem betroffenen Gerät 1 um ein Originalgerät des Geräteherstellers handelt. Nach dieser erfolgreichen Identifizierung des Nutzerendgerätes 1 als Originalgerät wird bei einer möglichen Ausführungsform die in Fig. 2 dargestellte Routine zur Fehlerbehandlung ausgeführt. In Schritt S5 kann dabei der Nutzer beispielsweise eine entsprechende Taste zur Bestätigung drücken, die an dem Nutzerendgerät 1 vorgesehen ist, um das Versetzen des Nutzerendgerätes in den nicht instandsetzbaren Zustand in Schritt S8 freizugeben. Die entsprechende Taste oder Tastenkombination kann im regulären Funktionsumfang eine alternative Funktion haben und nur im Rahmen des oben beschriebenen Prozesses umprogrammiert werden.

Wie man aus den Fig. 3, 4 erkennen kann erfolgt die Übertragung der Daten zwischen dem Server 7 des Geräteherstellers und dem Nutzerendgerät weitestgehend manipulationssicher. Der Vorteil der erfindungsgemäßen Vorgehensweise besteht darin, dass der Nutzer sich bei einem Auftreten einer Fehlfunktion an seinem Gerät 1 nicht sich zu dem Gerätehändler begeben muss, sondern direkt Verbindung mit dem Gerätehersteller aufnehmen kann. Hierdurch wird die Abwicklung des Gewährleistungsanspruchs seitens des Geräteherstellers erheblich beschleunigt, so dass der Nutzer das Austauschgerät innerhalb kurzer Zeit vom Gerätehersteller erhalten kann, sofern seine Gewährleistungsansprüche verifiziert worden sind. Darüber hinaus ist der logistische Aufwand für den Hersteller des Gerätes 1 zur Durchführung der Gewährleistungsroutine gering, da die Kommunikation zwischen dem Nutzerendgerät 1 bzw. dem Nutzer und dem Gerätehersteller über ein Datennetzwerk, beispielsweise über das Internet, erfolgen kann und weitestgehend automatisch durchgeführt werden kann. Das erfindungsgemäße System und Verfahren eignet sich für beliebige elektronische Nutzerendgeräte, vor allem für elektronische Consumerprodukte.

## Patentansprüche

1. System zur Handhabung eines zumindest vermutet teilweise defekten elektronischen Nutzerendgerätes (1), das funktionsrelevante Schaltkreise (2) und mindestens einen sicherheitsrelevanten Schaltkreis (4) aufweist, welches zwischen einer externer Schnittstelle (5) der Nutzerendgerätes (1) und den funktionsrelevanten Schaltkreisen (2) vorgesehen ist,
wobei das elektronische Nutzerendgerät (1) nach dessen erfolgreicher Identifizierung durch einen Server (7) durch eine unumkehrbare Manipulation an mindestens einem Bauteil des Nutzerendgerätes (1) automatisch unumkehrbar in einen nicht instandsetzbaren Zustand irreversibel versetzt wird, falls eine durchgeführte Diagnose der funktionsrelevanten Schaltkreise (2) des Nutzerendgerätes (1) ergibt, dass diese funktionsrelevanten Schaltkreise (2) in ihrer Funktionsfähigkeit beeinträchtigt oder ausgefallen sind,
wobei der sicherheitsrelevante Schaltkreis (4) einen eindeutigen Identifizierer des Nutzerendgerätes (1) zu dessen Identifizierung über die externe Schnittstelle (5) an den Server (7) überträgt, selbst wenn eine Stromversorgung des elektronischen Nutzerendgerätes (1) oder funktionsrelevante Schaltkreise (2) des Nutzerendgerätes (1) ausfallen, wobei der sicherheitsrelevante Schaltkreis (4) über die externe Schnittstelle (5) oder eine separate Batterie mit Strom versorgt wird, und
wobei der Server (7) nach Erhalt einer Bestätigung zur Unbrauchbarmachung des Nutzerendgerätes (1) den sicherheitsrelevanten Schaltkreis (4) des Nutzerendgerätes (1) dazu veranlasst, die unumkehrbare Manipulation an mindestens einem Bauteil des Nutzerendgerätes (1) vorzunehmen.

2. System nach Anspruch 1,
wobei der Server (7) ein Server eines Geräteherstellers oder ein Server eines Gerätehändlers ist, der mit dem Nutzerendgerät (1) über die externe Schnittstelle (5), insbesondere USB oder HMI-Schnittstelle, des Nutzerendgerätes (1) verbunden ist.

3. System nach Anspruch 1 oder 2,
wobei der eindeutige Identifizierer des Nutzerendgerätes (1) ein in einem Speicher des Nutzerendgerätes (1) gespeicherter Gerätecode (GC) ist, der aus einer Seriennummer (SN) des Nutzerendgerätes (1) abgeleitet ist.

4. System nach einem der vorangehenden Ansprüche 1 bis 3, wobei das elektronische Nutzerendgerät (1) erst dann automatisch in den nicht instandsetzbaren Zustand versetzt wird, nachdem ein Nutzer eine diesbezügliche Bestätigung an den Server (7) übertragen hat.

5. System nach einem der Ansprüche 1 bis 4,
wobei die unumkehrbare Manipulation die Zerstörung eines elektronischen Bauteils, insbesondere einer Sicherung, oder die Überschreibung von gespeicherten Konfigurationsdaten des Nutzerendgerätes (1) umfasst.

6. System nach einem der vorangehenden Ansprüche 1 bis 5, wobei bezüglich des zumindest teilweise defekten Nutzerendgerätes (1) nach Aufbau einer Verbindung zwischen dem betroffenen Nutzerendgerät (1) und dem Server (7) ein Datensatz zur Durchführung eines Datenabgleichs hinsichtlich eines Vorliegens eines Gewährleistungsfalles an den Server (7) übertragen wird.

7. System nach Anspruch 6,
wobei der an den Server (7) übertragene Datensatz aufweist:
- nutzerspezifische Daten des Nutzers,
- gerätespezifische Daten des Nutzerendgerätes (1), insbesondere den eindeutigen Identifizierer des Nutzerendgerätes (1),
- fehlerspezifische Daten zur Angabe von an dem Nutzerendgerät (1) aufgetretenen technischen Störungen und Störungsumständen, und
- verkaufsspezifische Daten zur Angabe eines Kaufvorganges zum Kauf des Nutzerendgerätes (1) durch den Nutzer von einem Gerätehändler oder dem Gerätehersteller.

8. System nach einem der vorangehenden Ansprüche 1 bis 7, wobei an dem Nutzerendgerät (1) vorgesehene Sensoren Sensordaten an den Server (7) liefern, die aufgetretene externe Einwirkungen auf das Nutzerendgerät (1), insbesondere mechanische Gewalteinwirkungen und Feuchtigkeitseinwirkungen, anzeigen.

9. System nach Anspruch 8,
wobei durch den Server (7) die in dem Datensatz enthaltenen fehlerspezifischen Daten und die von den Sensoren des Nutzerendgerätes (1) erhaltenen Sensordaten ausgewertet werden, um festzustellen, ob diese Daten zueinander kompatibel sind.

10. System nach einem der vorangehenden Ansprüche 1 bis 9, wobei die Diagnose der funktionsrelevanten Schaltkreise (2) innerhalb des Nutzerendgerätes (1) hinsichtlich ihrer Funktionsfähigkeit durch den Server (7) und/oder durch den sicherheitsrelevanten Schaltkreis (4) des Nutzerendgerätes (1) durchgeführt wird.

11. System nach Anspruch 10,
wobei die Diagnose der funktionsrelevanten Schaltkreise (2) des Nutzerendgerätes (1) interaktiv mit dem Nutzer durchgeführt wird, indem der Nutzer nach Aufforderung bestimmte Aktionen an dem Nutzerendgerät (1) vornimmt.

12. System nach einem der vorangehenden Ansprüche 1 bis 11, wobei der sicherheitsrelevante Schaltkreis (4) in dem Nutzerendgerät (1) selbst oder in einem mit dem Nutzerendgerät (1) verbundenen Bauteil, insbesondere einem Netzstecker, einem Adapter oder einem Verbindungskabel integriert ist.

13. System nach einem der vorangehenden Ansprüche 1 bis 12, wobei der Nutzer zur Bestätigung der Versetzung des Nutzerendgerätes (1) in den nicht instandsetzbaren Zustand mindestens eine an dem Nutzerendgerät (1) angebrachte Taste manuell betätigt.

14. System nach einem der vorangehenden Ansprüche 1 bis 13, wobei das elektronische Nutzerendgerät (1) ein tragbares Nutzerendgerät ist, das über die externe Schnittstelle (5) des Nutzerendgerätes (1) an einen Computer angeschlossen ist, der über ein Netzwerk (6), insbesondere ein Daten- oder Telefonnetz, mit dem Server (7) verbunden ist.

15. System nach einem der vorangehenden Ansprüche 1 bis 14, wobei der sicherheitsrelevante Schaltkreis (4) des Nutzerendgerätes (1) nach erfolgter Versetzung des Nutzerendgerätes (1) in den nicht instandsetzbaren Zustand eine entsprechende Rückmeldung an den Server (7) überträgt.

16. System nach Anspruch 15,
wobei der Server (7) nach Empfang der Rückmeldung einen Versand eines Austausch-Nutzerendgerätes zum Ersatz des in den nicht instandsetzbaren Zustand versetzten Nutzerendgerätes (1) an den Nutzer veranlasst.

17. Verfahren zur Handhabung eines zumindest teilweise defekten elektronischen Nutzerendgerätes (1),
wobei das elektronische Nutzerendgerät (1) nach dessen erfolgreicher Identifizierung durch einen Server (7) durch eine unumkehrbare Manipulation an mindestens einem Bauteil des Nutzerendgerätes (1) automatisch unumkehrbar in einen nicht instandsetzbaren Zustand versetzt wird, falls eine durchgeführte Diagnose funktionsrelevanter Schaltkreise (2) des Nutzerendgerätes (1) ergibt, dass diese funktionsrelevanten Schaltkreise (2) in ihrer Funktionsfähigkeit beeinträchtigt oder ausgefallen sind, wobei ein sicherheitsrelevanter Schaltkreis (4), der zwischen einer externen Schnittstelle (5) des Nutzerendgerätes (1) und den funktionsrelevanten Schaltkreisen (2) vorgesehen ist, einen eindeutigen Identifizierer des Nutzerendgerätes (1) zu dessen Identifizierung über die externe Schnittstelle (5) an den Server (7) überträgt, selbst wenn eine Stromversorgung des elektronischen Nutzerendgerätes (1) oder funktionsrelevante Schaltkreise (2) des Nutzerendgerätes (1) ausfallen, wobei der sicherheitsrelevante Schaltkreis (4) über die externe Schnittstelle (5) oder eine separate Batterie mit Strom versorgt wird, und
wobei der Server (7) nach Erhalt einer Bestätigung zur Unbrauchbarmachung des Nutzerendgerätes (1) den sicherheitsrelevanten Schaltkreis (4) des Nutzerendgerätes (1) dazu veranlasst, die unumkehrbare Manipulation an mindestens einem Bauteil des Nutzerendgerätes (1) vorzunehmen.

18. Elektronisches Nutzerendgerät (1) mit funktionsrelevanten Schaltkreisen (2) und mit mindestens einem sicherheitsrelevanten Schaltkreis (4),
wobei das elektronische Nutzerendgerät (1) nach seiner erfolgreichen Identifizierung gegenüber einem Server (7) durch den Server (7) durch eine unumkehrbare Manipulation an mindestens einem Bauteil des Nutzerendgerätes (1) automatisch in einen nicht instandsetzbaren Zustand versetzt wird, falls eine durchgeführte Diagnose funktionsrelevanter Schaltkreise (2) des Nutzerendgerätes (1) ergibt, dass diese funktionsrelevanten Schaltkreise (2) in ihrer Funktionsfähigkeit beeinträchtigt oder ausgefallen sind, wobei der sicherheitsrelevante Schaltkreis (4) einen eindeutigen Identifizierer des Nutzerendgerätes (1) zu dessen Identifizierung über eine externe Schnittstelle (5) an den Server (7) überträgt, selbst wenn eine Stromversrogung des elektronischen Nutzerendgerätes (1) oder funktionsrelevante Schaltkreise (2) des Nutzerendgerätes (1) ausfallen, wobei der sicherheitsrelevante Schaltkreis (4) über die externe Schnittstelle (5) oder eine separate Batterie mit Strom versorgt wird, und wobei der Server (7) nach Erhalt einer Bestätigung zur Unbrauchbarmachung des Nutzerendgerätes (1) den sicherheitsrelevanten Schaltkreis (4) des Nutzerendgerätes (1) dazu veranlasst, die unumkehrbare Manipulation an mindestens einem Bauteil des Nutzerendgerätes (1) vorzunehmen.

19. Server (7) zur Handhabung eines zumindest teilweise defekten elektronischen Nutzerendgerätes (1), das funktionsrelevante Schaltkreise (2) und mindestens einen sicherheitsrelevanten Schaltkreis (4) aufweist,
wobei der Server (7) das Versetzen des elektronischen Nutzerendgerätes (1) nach dessen erfolgreicher Identifizierung durch Prüfung eines von dem sicherheitsrelevanten Schaltkreis (4) des Nutzerendgerätes (1) über eine externe Schnittstelle (5) des Nutzerendgerätes (1) übertragenen Identifizierers und nach Erhalt einer Bestätigung zur Unbrauchbarmachung des Nutzerendgerätes (1) in einen nicht instandsetzbaren Zustand durch eine unumkehrbare Manipulation an mindestens einem Bauteil des Nutzerendgerätes (1) durch Senden eines Steuerbefehls veranlasst, falls eine durchgeführte Diagnose der funktionsrelevanten Schaltkreise (2) des Nutzerendgerätes (1) ergibt, dass diese funktionsrelevanten Schaltkreise (2) in ihrer Funktionsfähigkeit beeinträchtigt oder ausgefallen sind.

## Claims

1. System for handling an at least supposedly partially defective electronic user terminal (1) which has function-relevant circuits (2) and at least one security-relevant circuit (4), which is provided between an external interface (5) of the user terminal (1) and the function-relevant circuits (2),
wherein the electronic user terminal (1), after being successfully identified by a server (7), is automatically irreversibly put irreversibly into an irreparable state by means of an irreversible manipulation of at least one component of the user terminal (1), if a performed diagnosis of the function-relevant circuits (2) of the user terminal (1) indicates that these function-relevant circuits (2) are impaired in terms of their functionality or have failed, wherein the security-relevant circuit (4) transmits a unique identifier of the user terminal (1) for the identification thereof to the server (7) via the external interface (5), even if a power supply of the electronic user terminal (1) or function-relevant circuits (2) of the user terminal (1) fail,
wherein the security-relevant circuit (4) is supplied with power via the external interface (5) or a separate battery, and
wherein, after receipt of a confirmation to render the user terminal (1) unusable, the server (7) causes the security-relevant circuit (4) of the user terminal (1) to effect the irreversible manipulation of at least one component of the user terminal (1).

2. System as claimed in claim 1,
wherein the server (7) is a server of a device manufacturer or a server of a device dealer which is connected to the user terminal (1) via the external interface (5), in particular USB or HMI interface, of the user terminal (1).

3. System as claimed in claim 1 or 2,
wherein the unique identifier of the user terminal (1) is a device code (GC) which is stored in a memory of the user terminal (1) and is derived from a serial number (SN) of the user terminal (1).

4. System as claimed in any one of the preceding claims 1 to 3, wherein the electronic user terminal (1) is automatically put into the irreparable state only after a user has transmitted a confirmation in this respect to the server (7) .

5. System as claimed in any one of claims 1 to 4,
wherein the irreversible manipulation includes the destruction of an electronic component, in particular a fuse, or the overwriting of stored configuration data of the user terminal (1).

6. System as claimed in any one of the preceding claims 1 to 5, wherein, with respect to the at least partially defective user terminal (1), after establishing a connection between the affected user terminal (1) and the server (7), a dataset is transmitted to the server (7) for performing data synchronisation with regard to the presence of a warranty.

7. System as claimed in claim 6,
wherein the dataset transmitted to the server (7) comprises:
- user-specific data of the user,
- device-specific data of the user terminal (1), in particular the unique identifier of the user terminal (1),
- error-specific data for indicating technical malfunctions which have occurred on the user terminal (1) and circumstances relating to malfunctions, and
- sales-specific data for indicating a purchasing procedure relating to the user purchasing the user terminal (1) from a device dealer or the device manufacturer.

8. System as claimed in any one of the preceding claims,
wherein sensors provided on the user terminal (1) provide sensor data to the server (7) indicating external effects on the user terminal (1) which have occurred, in particular undue mechanical force and effects of moisture.

9. System as claimed in claim 8,
wherein the error-specific data contained in the dataset and the sensor data obtained by the sensors on the user terminal (1) are evaluated by the server (7) in order to establish whether these data are compatible with each other.

10. System as claimed in any one of the preceding claims 1 to 9, wherein the function-relevant circuits (2) within the user terminal (1) are diagnosed with regard to their functionality by the server (7) and/or by the security-relevant circuit (4) of the user terminal (1).

11. System as claimed in claim 10,
wherein the function-relevant circuits (2) of the user terminal (1) are diagnosed interactively with the user, in that the user performs specific actions on the user terminal (1), upon request.

12. System as claimed in any one of the preceding claims 1 to 11,
wherein the security-relevant circuit (4) is integrated in the user terminal (1) itself or in a component connected to the user terminal (1), in particular a mains plug, an adapter or a connecting cable.

13. System as claimed in any one of the preceding claims 1 to 12,
wherein the user manually actuates at least one button provided on the user terminal (1) in order to confirm putting the user terminal (1) into the irreparable state.

14. System as claimed in any one of the preceding claims 1 to 13,
wherein the electronic user terminal (1) is a portable user terminal which is connected to a computer via the external interface (5) of the user terminal (1), said computer being connected to the server (7) via a network (6), in particular a data or telephone network.

15. System as claimed in any one of the preceding claims 1 to 14,
wherein, after the user terminal (1) has been put into the irreparable state, the security-relevant circuit (4) of the user terminal (1) transmits a corresponding acknowledgement to the server (7).

16. System as claimed in claim 15,
wherein, after receipt of the acknowledgement, the server (7) initiates the dispatching of a replacement user terminal to the user to replace the user terminal (1) put into the irreparable state.

17. Method for handling an at least partially defective electronic user terminal (1),
wherein the electronic user terminal (1), after being successfully identified by a server (7), is automatically irreversibly put into an irreparable state by means of an irreversible manipulation of at least one component of the user terminal (1), if a performed diagnosis of function-relevant circuits (2) of the user terminal (1) indicates that these function-relevant circuits (2) are impaired in terms of their functionality or have failed, wherein a security-relevant circuit (4) which is provided between an external interface (5) of the user terminal (1) and the function-relevant circuits (2) transmits a unique identifier of the user terminal (1) for the identification thereof to the server (7) via the external interface (5), even if a power supply of the electronic user terminal (1) or function-relevant circuits (2) of the user terminal (1) fail, wherein the security-relevant circuit (4) is supplied with power via the external interface (5) or a separate battery, and
wherein, after receipt of a confirmation to render the user terminal (1) unusable, the server (7) causes the security-relevant circuit (4) of the user terminal (1) to effect the irreversible manipulation of at least one component of the user terminal (1).

18. Electronic user terminal (1) having function-relevant circuits and having at least one security-relevant circuit (4),
wherein the electronic user terminal (1), after being successfully identified with respect to the server (7), is automatically put into an irreparable state by the server (7) by means of an irreversible manipulation of at least one component of the user terminal (1), if a performed diagnosis of the function-relevant circuits (2) of the user terminal (1) indicates that these function-relevant circuits (2) are impaired in terms of their functionality or have failed, wherein the security-relevant circuit (4) transmits a unique identifier of the user terminal (1) for the identification thereof to the server (7) via an external interface (5), even if a power supply of the electronic user terminal (1) or function-relevant circuits (2) of the user terminal (1) fail, wherein the security-relevant circuit (4) is supplied with power via the external interface (5) or a separate battery, and wherein, after receipt of a confirmation to render the user terminal (1) unusable, the server (7) causes the security-relevant circuit (4) of the user terminal (1) to effect the irreversible manipulation of at least one component of the user terminal (1).

19. Server (7) for handling an at least partially defective electronic user terminal (1) which has function-relevant circuits (2) and at least one security-relevant circuit (4), wherein the server (7) causes the electronic user terminal (1), after being successfully identified by checking an identifier transmitted by the security-relevant circuit (4) of the user terminal (1) via an external interface (5) of the user terminal (1) and after receipt of a confirmation to render the user terminal (1) unusable, to be put into an irreparable state by means of an irreversible manipulation of at least one component of the user terminal (1) by sending a control command, if a performed diagnosis of the function-relevant circuits (2) of the user terminal (1) indicates that these function-relevant circuits (2) are impaired in terms of their functionality or have failed.

## Revendications

1. Système de manipulation d'un terminal d'utilisateur électronique (1) au moins supposément partiellement défectueux, qui comporte des circuits de commande (2) importants pour le fonctionnement et au moins un circuit de commande (4) important pour la sécurité, qui est prévu entre une interface (5) externe du terminal d'utilisateur (1) et les circuits de commande (2) importants pour le fonctionnement,
le terminal d'utilisateur électronique (1) étant, après son identification réussie par un serveur (7), placé irrévocablement de façon irréversible et automatique dans un état non réparable par une manipulation irréversible sur au moins un composant du terminal d'utilisateur (1) si un diagnostic effectué des circuits de commande (2), importants pour le fonctionnement, du terminal d'utilisateur (1) indique que ces circuits de commande (2) importants pour le fonctionnement sont affectés dans leur fonctionnalité ou sont tombés en panne,
le circuit de commande (4) important pour la sécurité transmettant au serveur (7), via l'interface (5) externe, un identificateur univoque du terminal d'utilisateur (1) pour son identification même lorsqu'une alimentation électrique du terminal d'utilisateur électronique (1) ou de circuits de commande (2), importants pour le fonctionnement, du terminal d'utilisateur (1) tombent en panne, le circuit de commande (4) important pour la sécurité étant alimenté en courant via l'interface (5) externe ou via une batterie séparée et, après l'obtention d'une confirmation concernant la mise hors d'usage du terminal d'utilisateur (1), le serveur (7) ordonne au circuit de commande (4), important pour la sécurité, du terminal d'utilisateur (1) de procéder à la manipulation irréversible sur au moins un composant du terminal d'utilisateur (1).

2. Système selon la revendication 1,
le serveur (7) étant un serveur d'un fabricant d'appareils ou un serveur d'un revendeur d'appareils qui est raccordé au terminal d'utilisateur (1) via l'interface (5) externe, en particulier une interface USB ou HMI, du terminal d'utilisateur (1).

3. Système selon la revendication 1 ou 2,
l'identificateur univoque du terminal d'utilisateur (1) étant un code d'appareil (CG), enregistré dans une mémoire du terminal d'utilisateur (1), qui est dérivé d'un numéro de série (SN) du terminal d'utilisateur (1).

4. Système selon l'une des revendications précédentes 1 à 3, le terminal d'utilisateur électronique (1) n'étant placé automatiquement dans l'état non réparable qu'après qu'un utilisateur a transmis au serveur (7) une confirmation à ce sujet.

5. Système selon l'une des revendications 1 à 4, la manipulation irréversible comprenant la destruction d'un composant électronique, en particulier un fusible, ou l'écrasement de données de configuration enregistrées du terminal d'utilisateur (1).

6. Système selon l'une des revendications précédentes 1 à 5, dans lequel, concernant le terminal d'utilisateur (1) au moins partiellement défectueux, après l'établissement d'une liaison entre le terminal d'utilisateur (1) concerné et le serveur (7), un jeu de données est transmis au serveur (7) en vue de la réalisation d'une comparaison des données concernant l'existence d'un cas de garantie.

7. Système selon la revendication 6,
le jeu de données transmis au serveur (7) comportant :
- des données de l'utilisateur spécifiques à l'utilisateur,
- des données du terminal d'utilisateur (1) spécifiques à l'appareil, en particulier l'identificateur univoque du terminal d'utilisateur (1),
- des données spécifiques au défaut en vue de l'indication de perturbations et situations de perturbations techniques constatées sur le terminal d'utilisateur (1), et
- des données spécifiques à la vente en vue de l'indication d'un processus d'achat en vue de l'achat du terminal d'utilisateur (1) par l'utilisateur auprès d'un revendeur d'appareils ou du fabricant d'appareils.

8. Système selon l'une des revendications précédentes 1 à 7, des capteurs prévus sur le terminal d'utilisateur (1) livrant au serveur (7) des données de capteur qui indiquent des effets externes constatés agissant sur le terminal d'utilisateur (1), en particulier des actions violentes mécaniques et des actions de l'humidité.

9. Système selon la revendication 8,
les données spécifiques au défaut contenues dans le jeu de données et les données de capteurs obtenues par les capteurs du terminal d'utilisateur (1) étant analysées par le serveur (7) pour constater si ces données sont compatibles entre elles.

10. Système selon l'une des revendications précédentes 1 à 9, le diagnostic des circuits de commande (2) importants pour le fonctionnement étant, en ce qui concerne leur fonctionnalité, effectué par le serveur (7) et/ou par le circuit de commande (4) important pour la sécurité du terminal d'utilisateur (1) à l'intérieur du terminal d'utilisateur (1).

11. Système selon la revendication 10,
le diagnostic des circuits de commande (2), importants pour le fonctionnement, du terminal d'utilisateur (1) étant effectué de façon interactive avec l'utilisateur par le fait que l'utilisateur, après y avoir été invité, exécute des actions définies sur le terminal d'utilisateur (1).

12. Système selon l'une des revendications précédentes 1 à 11, le circuit de commande (4) important pour la sécurité étant intégré dans le terminal d'utilisateur (1) lui-même ou dans un composant raccordé au terminal d'utilisateur (1), en particulier une fiche secteur, un adaptateur ou un câble de raccordement.

13. Système selon l'une des revendications précédentes 1 à 12, dans lequel, en vue de la confirmation du placement du terminal d'utilisateur (1) dans l'état non réparable, l'utilisateur actionne manuellement au moins une touche mise en place sur le terminal d'utilisateur (1).

14. Système selon l'une des revendications précédentes 1 à 13, le terminal d'utilisateur électronique (1) étant un terminal d'utilisateur portable qui, via l'interface (5) externe du terminal d'utilisateur (1), est connecté à un ordinateur qui est raccordé au serveur (7) via un réseau (6), en particulier un réseau de données ou un réseau téléphonique.

15. Système selon l'une des revendications précédentes 1 à 14, le circuit de commande (4), important pour la sécurité, du terminal d'utilisateur (1) transmettant au serveur (7) un retour d'information correspondant une fois effectué le placement du terminal d'utilisateur (1) dans l'état non réparable.

16. Système selon la revendication 15,
le serveur (7), après la réception du retour d'information, ordonnant un envoi, à l'utilisateur, d'un terminal d'utilisateur de remplacement en vue du remplacement du terminal d'utilisateur (1) placé dans l'état non réparable.

17. Procédé destiné à la manipulation d'un terminal d'utilisateur électronique (1) au moins partiellement défectueux, le terminal d'utilisateur électronique (1) étant, après son identification réussie par un serveur (7), placé automatiquement de façon irréversible dans un état non réparable par une manipulation irréversible sur au moins un composant du terminal d'utilisateur (1) si un diagnostic effectué de circuits de commande (2), importants pour le fonctionnement, du terminal d'utilisateur (1) indique que ces circuits de commande (2) importants pour le fonctionnement sont affectés dans leur fonctionnalité ou sont tombés en panne,
un circuit de commande (4) important pour la sécurité, qui est prévu entre une interface (5) externe du terminal d'utilisateur (1) et les circuits de commande (2) importants pour le fonctionnement, transmettant au serveur (7) via l'interface (5) externe un identificateur univoque du terminal d'utilisateur (1) pour son identification même lorsqu'une alimentation électrique du terminal d'utilisateur électronique (1) ou de circuits de commande (2), importants pour le fonctionnement, du terminal d'utilisateur (1) tombent en panne, le circuit de commande (4) important pour la sécurité étant alimenté en courant via l'interface (5) externe ou via une batterie séparée et,
après l'obtention d'une confirmation concernant la mise hors d'usage du terminal d'utilisateur (1), le serveur (7) ordonnant au circuit de commande (4), important pour la sécurité, du terminal d'utilisateur (1) de procéder à la manipulation irréversible sur au moins un composant du terminal d'utilisateur (1).

18. Terminal d'utilisateur électronique (1) avec des circuits de commande (2) importants pour le fonctionnement et avec au moins au moins un circuit de commande (4) important pour la sécurité,
le terminal d'utilisateur électronique (1) étant, après son identification réussie vis-à-vis d'un serveur (7), placé automatiquement par le serveur (7) dans un état non réparable par une manipulation irréversible sur au moins un composant du terminal d'utilisateur (1) si un diagnostic effectué de circuits de commande (2), importants pour le fonctionnement, du terminal d'utilisateur (1) indique que ces circuits de commande (2) importants pour le fonctionnement sont affectés dans leur fonctionnalité ou sont tombés en panne, le circuit de commande (4) important pour la sécurité transmettant au serveur (7) un identificateur univoque du terminal d'utilisateur (1) pour son identification via une interface (5) externe même lorsqu'une alimentation électrique du terminal d'utilisateur électronique (1) ou de circuits de commande (2), importants pour le fonctionnement, du terminal d'utilisateur (1) tombent en panne, le circuit de commande (4) important pour la sécurité étant alimenté en courant via l'interface (5) externe ou via une batterie séparée et, après l'obtention d'une confirmation concernant la mise hors d'usage du terminal d'utilisateur (1), le serveur (7) ordonnant au circuit de commande (4), important pour la sécurité, du terminal d'utilisateur (1) de procéder à la manipulation irréversible sur au moins un composant du terminal d'utilisateur (1).

19. Serveur (7) destiné à la manipulation d'un terminal d'utilisateur électronique (1) au moins partiellement défectueux qui comporte des circuits de commande (2) importants pour le fonctionnement et au moins un circuit de commande (4) important pour la sécurité, dans lequel, après l'identification réussie du terminal d'utilisateur électronique (1) par l'examen d'un identificateur transmis par le circuit de commande, (4) important pour la sécurité, du terminal d'utilisateur (1) via une interface (5) externe et, après l'obtention d'une confirmation destinée à la mise hors d'usage du terminal d'utilisateur (1), le serveur (7) ordonnant, par l'envoi d'une instruction de commande, le placement du terminal d'utilisateur électronique (1) dans un état non réparable par une manipulation irréversible sur au moins un composant du terminal d'utilisateur (1) si un diagnostic effectué des circuits de commande (2), importants pour le fonctionnement, du terminal d'utilisateur (1) indique que ces circuits de commande (2) importants pour le fonctionnement sont affectés dans leur fonctionnalité ou sont tombés en panne.
